# EUROPÄISCHE PATENTSCHRIFT

(11) **EP 1 151 057 B1**
(45) Veröffentlichungstag und Bekanntmachung des Hinweises auf die Patenterteilung: **07.04.2004**
(21) Anmeldenummer: 00976016.6
(22) Anmeldetag: 09.11.2000
(51) Int. Cl.: C09K 11/56, C09K 11/58

(54) **ZINKSULFIDISCHE ELEKTROLUMINOPHORE SOWIE VERFAHREN ZU IHRER HERSTELLUNG**
ZINC SULPHIDE ELECTROLUMINOPHORES AND METHOD FOR PRODUCTION THEREOF
PHOSPHORES ELECTROLUMINESCENTS A BASE DE SULFURE DE ZINC ET LEUR PROCEDE DE PRODUCTION

(30) Priorität: 10.11.1999 DE 19953924
(43) Veröffentlichungstag der Anmeldung: 07.11.2001
(73) Patentinhaber: Bundesdruckerei GmbH, 10958 Berlin (DE); Leuchtstoffwerke Breitungen GmbH, 98597 Breitungen (DE)
(72) Erfinder: KAPPE, Frank, 33375 Rheda-Wiedenbrück (DE); AHLERS, Benedikt, 10997 Berlin (DE); FRANZ-BURGHOLZ, Arnim, 10967 Berlin (DE); STARICK, Detlef, 36448 Bad Liebenstein (DE); LIMBURG, Hans, Jürgen, 36469 Tiefenort (DE); VOH, Monika, 98597 Breitungen (DE)
(74) Vertreter: Riebling, Peter, Dr.-Ing.
(86) Internationale Anmeldenummer: PCT/EP2000/011069
(87) Internationale Veröffentlichungsnummer: WO 2001/034723

(56) Entgegenhaltungen:
- US-A- 5 269 966
- US-A- 5 273 774
- DATABASE WPI Section Ch, Week 198134 Derwent Publications Ltd., London, GB; Class A85, AN 1981-61331D XP002156596 & JP 56 082875 A (NIPPON ELECTRIC CO), 6. Juli 1981 (1981-07-06)

## Beschreibung

Gegenstand der Erfindung sind feinkörnige elektrolumineszierende Phosphore auf der Basis von Zinksulfid (ZnS) sowie Verfahren zu ihrer Herstellung.

Derartige Phosphore sind zumeist mit Kupfer (Cu), wahlweise aber auch mit Kupfer und/oder Gold (Au) sowie mit Kupfer und Mangan (Mn) dotiert und enthalten darüber hinaus einen oder mehrere Koaktivatoren, wobei zu diesem Zwecke zumeist Halogenidanionen (Cl, Br, I) oder bestimmte dreiwertige Kationen (z. B. Al, Ga, In) in das ZnS-Gitter eingebaut werden.

In Abhängigkeit von ihrer konkreten chemischen Zusammensetzung emittieren die zinksulfidischen Elektroluminophore im blauen, grünen oder gelb-orangenen Bereich des sichtbaren Spektrums. Sie werden in der Technik zur Herstellung von Elektrolumineszenzlampen eingesetzt, die entweder zur Hintergrundbeleuchtung von LCD-Displays (Uhren, Taschenrechner, Mobiltelefone, Instrumentenbeleuchtung etc.) oder aber als Leucht-und Markierungelemente z.B. in Flugzeugen und Kraftfahrzeugen, in Innenräumen von Gebäuden und an deren Fassaden sowie in Werbeinstallationen u.s.w. angewendet werden.

Es ist bekannt, daß zinksulfidische Elektroluminophore im Vergleich zu technischen Leuchtstoffen für die UV-, Röntgen- und Kathodenstrahlanregung eine verhältnismäßig geringe Lebensdauer aufweisen. Die Halbwert-Lebenszeit (das ist die Zeit, in der die Helligkeit der EL-Phosphore auf die Hälfte ihres ursprünglichen Wertes absinkt) unverkapselter Elektroluminophore beträgt nur einige hundert Stunden. Es ist dabei eine verbreitete Ansicht, daß die Lebensdauer neben anderen Faktoren wesentlich von der Korngröße der Elektroluminophore beeinflußt wird. Dies ist einer der Gründe dafür, warum handelsübliche ZnS-EL-Phosphore typischerweise mittlere Korngrößen im Bereich von 20 bis 40 µm aufweisen.

Derart große Pigmente können aber nur eingeschränkt zu qualitativ hochwertigen Schichten verarbeitet werden. So müssen bei den gewöhnlich zur Anwendung kommenden Siebdrucktechniken vergleichsweise grober Siebe eingesetzt werden, wodurch Trockenschichtdicken von bis zu 40 µm entstehen. Diese weisen infolge der unvermeidlichen Inhomogenitäten solcher Schichten häufig eine bereits visuell erkennbare ungleichmäßige EL-Emission auf.
Ein weiterer, auf die Grobkörnigkeit handelsüblicher EL-Pigmente zurückzuführender Nachteil entsprechend dicker Elektrolumineszenzanordnungen besteht darin, daß zur Realisierung der gewünschten Helligkeiten relativ hohe Versorgungsspannungen erforderlich sind. Diese können zu starken Belastungen der verwendeten Bindemittel und somit zu einer Reduktion der Lebensdauer der EL-Anordnungen führen.

Außerdem kann es bei der Verwendung der dem Stand der Technik gemäßen groben EL-Pigmente trotz der eingestellten Schichtdicken von bis zu 40 µm vorkommen, daß einzelne besonders große Leuchtstoffteilchen aus der Schicht herausragen. In solchen Fällen verringert sich die Spannungs-bzw. Durchschlagsfestigkeit der EL-Folien, woraus eine zusätzliche Abnahme der Lebensdauer resultiert.

Eine deutliche Verringerung der mittleren Korngröße der EL-Phosphore bei gleichzeitiger Bewahrung oder Verbesserung der Helligkeits- und Lebensdauerwerte ist deshalb für viele auf der Anwendung von Siebdruckverfahren beruhende technische Applikationen äußerst wünschenswert.

Sollen, wie unlängst in der DE 19 708 543 vorgeschlagen, EL-Pigmente sogar mit Tiefdruck- oder Offsetdruckverfahren zu feinen graphischen Strukturen z.B. zu Sicherheitselementen im Wertdruckbereich verarbeitet werden, so ist die Verfügbarkeit feinkörniger EL-Phosphore als eine entscheidende Voraussetzung für die technische Realisierbarkeit einer solchen Anwendung anzusehen. Erfahrungsgemäß ist es in diesem Fall erforderlich, mittlere Pigmentkorngrößen von 2 bis 6 µm einzusetzen, um den technischen Gegebenheiten dieser Druckverfahren entsprechen zu können.

Verfahren zur Herstellung effizienter EL-Phosphore sind seit langem bekannt. Der dabei erreichte Stand wird beispielsweise im US-Patent *4,859,361* sowie in der WO 91/16722 beschrieben. Hiernach sind zur Herstellung von Cu- oder Cu und Mndotierten und mit den üblichen Koaktivatoren kodierten ZnS-Elektroluminophoren folgende Schritte erforderlich:
1. Schritt: Zubereitung einer Mischung aus ZnS, der gewünschten Menge eines EL-Aktivators (z.B. CuSO₄) und eines koaktivierenden, halogenidhaltigen Schmelzmittels (zumeist BaCl₂, MgCl₂, NaCl).
2. Schritt: Glühen dieses Gemisches bei Temperaturen zwischen 1000 und 1300 °C.
3. Schritt: Abkühlen des gebrannten Materials auf Raumtemperatur und Waschen mit Wasser.
4. Schritt: Mechanische Beanspruchung des Materials durch Vermahlung.
5. Schritt: Erneutes Glühen des so behandelten Materials im Temperaturbereich zwischen 600 und 900 °C, ggf. nach vorheriger, erneuter Addition von ZnSO₄ und CuSO₄.
6. Schritt: Abkühlen auf Raumtemperatur, wobei ggf. nach einer bestimmten Abkühlzeit mit H₂O gequencht wird.
7. Schritt: Optionales Waschen mit H₂O und/oder Mineralsäuren zur Entfernung löslicher Bestandteile und mit KCN-Lösung zur Entfernung von überschüssigem Cu₂S.

Eine besondere Bedeutung wird von der Erfindung dem 4. Präparationsschritt zugeschrieben. Durch die mechanische Beanspruchung des zuvor bei 1000 bis 1300 °C geglühten Materials soll ein Teil des unter diesen Bedingungen gebildeten hexagonalen ZnS-Elektrolumineszenzleuchtstoffes in die kubische Kristallform transformiert werden. Es wird behauptet, daß eine solche Transformation eine Verbesserung der Helligkeit der EL-Phosphore, vor allem aber eine Erhöhung der Lebensdauer bewirkt.

Bei der Anwendung des beschriebenen Verfahrens und von vergleichbaren Verfahrensvarianten werden zinksulfidische Elektroluminophore mit mittleren Korngrößen zwischen 20 und 40 µm erhalten, wobei einzelne Teilchen diesen Korngrößenbereich noch deutlich übertreffen können. Das ist vor allem auf die hohen Glühtemperaturen sowie auf die Verwendung von Schmelzmitteln mit stark mineralisierender Wirkung zurückzuführen. Elektroluminophore dieser Korngrößenklasse weisen die zuvor genannten Nachteile auf.

In der Druckschrift US 5,643,496 wird das Verfahren dahingehend modifiziert, daß durch Justierung der Temperatur des ersten Glühprozesses auf 1100 bis 1190 °C, vorzugsweise auf 1160 °C, zinksulfidische Elektroluminophore gewonnen werden können, die eine Korngröße von kleiner als 23 µm, vorzugsweise 21 µm aufweisen und die bezüglich der erreichbaren Helligkeiten und Halbwerts-Lebenszeiten das Niveau von 25 µm großen ZnS-Elektrolumineszenzmaterialien erreichen sollen.

Eine derart geringfügige Reduzierung der mittleren Korngröße der Elektroluminophore führt selbst bei der Anwendung von Siebdruckverfahren kaum zu spürbaren Verbesserungen. Die prinzipiellen Nachteile derart grober EL-Phosphorteilchen bleiben weitestgehend erhalten.

Mittlere EL-Pigmentkorngrößen im Bereich von 10 µm sollen mit einem Verfahren nach US 5,635,111 erreichbar sein, wobei die in dieser Druckschrift beschriebene Lösung allerdings gravierende technologische Nachteile aufweist. Diese bestehen zum einen darin, daß in einer komplizierten Vakuumapparatur in Anwesenheit von äußerst aggressiven und toxischen Gasen (Halogenwasserstoffe, H₂S) geglüht wird, was entsprechende Gefahren beim Versagen der Apparatur mit sich bringt. Zum anderen scheint das sehr aufwendige und kostenintensive Verfahren kaum zur Herstellung größerer Mengen EL-Leuchtstoff unter technischen Bedingungen geeignet zu sein. Der Erfindung liegt deshalb die Aufgabe zugrunde, ein neuartiges, kostengünstiges Verfahren zur Herstellung von feinkörnigen zinksulfidischen Elektroluminophoren zu schaffen, die sich mit unterschiedlichen Drucktechniken zu effizient und langlebig elektrolumineszierenden Schichten hoher Qualität verarbeiten lassen.

Erfindungsgemäß wird die Aufgabe durch die technische Lehre des Anspruches 1 gelöst. Danach ist das erfindungsgemäße Verfahren durch folgende Präparationsschritte und Maßnahmen gekennzeichnet:
1 Schritt: Herstellen von speziellen, feinkörnigen Zinksulfiden und Verwendung dieser Materialien als Ausgangsprodukt für die Synthese der erfindungsgemäßen feinkörnigen zinksulfidischen Elektroluminophore.
   Die Herstellung derartiger Zinksulfid-Ausgangsmaterialien erfolgt durch Ausfällen von ZnS aus den Lösungen von Zinksalzen wie z. B. ZnSO₃, Zn(NO₃)₂ und ZnCl₃, vorzugsweise aus Zinksulfatlösungen, mit Hilfe von eingeleitetem H₂S-Gas oder aber infolge der Zugabe von H₂S generierenden Verbindungen bei Temperaturen von 20 bis 80° C und pH-Werten von 0.5 bis 3.0. Dabei wird die Zinkionen-Konzentration der vorgelegten Zinksalzlösungen auf Werte von 0.25 mol/l bis 2.0 mol/l eingestellt.
   Als Ergebnis dieser Fällungsreaktion entstehen feinkörnige Zinksulfide mit sehr engen Korngrößenverteilungen, wobei die gewünschte mittlere Korngröße durch die Führung der Verfahrensparamter, wie z. B. der Zinkionen-Konzentration, der Einleitgeschwindigkeit von H₂S, der Rührgeschwindigkeit, der Temperatur und des pH-Wertes gesteuert werden kann.
   Typischer Weise betragen die mittleren Korngrößen der erfindungsgemäß hergestellten und als Ausgangsmaterial für die Synthese der erfindungsgemäßen Elektroluminophore verwendeten Zinksulfide 2 bis 20 µm, vorzugsweise 2 bis 5 µm oder 5 bis 15 µm.
   Die ist ein wesentlicher Vorteil gegenüber dem Stand der Technik, weil bereits in diesem Verfahrensschritt auf rein präparativem Wege, also ohne die Anwendung von aufwendigen Sieb- bzw. schädlichen Vermahlungsprozessen feinkörnige Zinksulfide erzeugt werden, deren Korngrößenverteilung dann durch die spezifische Ausgestaltung der weiteren Verfahrensschritte auf die der erfindungsgemäßen zinksulfidischen Elektroluminophore übertragen wird und über die Abfolge dieser Schritte im wesenltichen erhalten bleibt.
   Ein weiterer Vorteil besteht darin, daß neben den Korngrößen auch die Oberflächeneigenschaften der ZnS-Fällprodukte über die konkrete Wahl der Fällungsbedingungen gesteuert werden können. Es werden kompakte ZnS-Kristallite mit einer sehr geringen Tendenz zur Ausbildung von Agglomeraten erhalten. Diese speziellen morphologischen Eigenschaften der erfindungsgemäß hergestellten ZnS-Ausgangsmaterialien wirken sich vorteilhaft auf die Komstruktur und die Leistungsfähigkeit der resultierenden erfindungsgemäßen Elektroluminophore aus.
2. Schritt: Mischen der erfindungsgemäß hergestellten feinkörnigen ZnS-Ausgangsmaterialien mit den zur Leuchtstoffformierung benötigten Aktivatoren-Koaktivatorenverbindungen.
   Die zur Aktivierung der Zinksulfide erforderlichen Kupfer- und/oder Gold- bzw. Kupfer- und/oder Gold- und Manganverbindungen (z. B. CuSO₄, HAuCl₄.4 H₂O, MnSO₄) sowie ggf. zur Koaktivierung benötigte Aluminiumverbindungen (z. B. Al(NO₃)₃) können bereits während der Fällung des ZnS oder aber nach Beendigung der Fällung zu der gewaschenen ZnS-Suspension hinzugegeben werden. Dadurch werden eine für den Prozeß der Leuchtstoffformierung vorteilhafte homogene Verteilung der Aktivatoren und Koaktivatoren im Ansatzgemisch sowie eine enge Kontaktierung der Aktivator-, Koaktivator- und der ZnS-Partikel ermöglicht.
   Es ist jedoch auch möglich, die Aktivator- und Koaktivatorverbindungen und das erfindungsgemäß hergestellte Zinksulfid trocken zu mischen. In diesem Fall besteht eine bevorzugte Verfahrensvariante darin, die Aktivator- und Koaktivatorverbindungen zunächst mit einem Teil des getrockneten ZnS zu homogenisieren und dieses Gemisch dann mit der zur Wahrung der angestrebten Leuchtstoffzusammensetzung erforderlichen Restmenge an ZnS zu vermischen.
   Zu dieser Mischung werden auch die in folgenden näher beschriebenen Schmelzmittel hinzugegeben.
3. Schritt: Ein- bis zehnstündiges Glühen des Ansatzgemisches bei Temperaturen unterhalb von 1000° C, vorzugsweise im Temperaturbereich zwischen 800 und 1000° C an Luft oder in einer inerten Stickstoffatmosphäre oder in einer Atmosphäre bestehend aus einem Gemisch aus Stickstoff und 1 bis 10 % Wasserstoff in Gegenwart von aus den Verbindungsklassen der Fluoride, Bromide und Iodide ausgewählten Schmelzmitteln mit nur schwach mineralisierender Wirkung.
   Nach Beendigung des Glühprozesses wird das Glühgut auf Raumtemperatur abgekühlt, anschließend mit deionisiertem Wasser gewaschen und dann gegebenenfalls filtriert und getrocknet.
   Auf diese Weise wird tatsächlich sichergestellt, daß die mittlere Korngröße und die Korngrößenverteilung der zinksulfidischen Elektroluminophore nach Beendigung des Glühprozesses und der Aufarbeitung des Glühgutes im wesentlichen mit der der erfundungsgemäß hergestellten und zur Leuchtstoffsynthese verwendeten ZnS-Ausgangsmaterialien übereinstimmt. Die erfindungsgemäßen feinkörnigen ZnS-Elektroluminophore, die nach diesem Verfahrensschritt erhalten werden, weisen typische mittlere Korngrößen zwischen 2 und 20 µm, vorzugsweise zwischen 2 und 5 µm oder 5 und 15 µm auf.
   Wichtig gegenüber dem Stand der Technik ist es, daß der beschriebene Glühprozeß bei Temperaturen unter 1000 °C durchgeführt wird und daß auf die Anwesenheit von insbesondere chloridhaltigen, stark mineralisierend wirkenden Schmelzmitteln vollkommen verzichtet wird. Die Verwendung von fluorid- und/oder bromid- und/oder iodidhaltigen Schmelzmittel befördern zwar die für den Prozeß der Leuchtstoffformierung erforderliche Rekonstruktion des ZnS-Gitters und den zielgerichteten Einbau der Aktivatoren; ihre Wirkmechanismen sind aber solcher Art, daß das Kornwachstum im beschriebenen Temperaturbereich wirkungsvoll begrenzt werden kann.
   Die erfindungsgemäß verwendeten Schmelzmittel können zugleich als Quelle für den Einbau der Koaktivatoren fungieren. Dazu erhalten sie gegebenenfalls neben den genannten Halogenidanionen bestimmte dreiwertige kationische Bestandteile (z. B. Al³⁺, Bi³⁺).
   Ein weiterer Vorteil des erfindungsgemäßen Verfahrens gegenüber dem Stand der Technik besteht darin, daß die synthetisierten Elektroluminophore wegen der auf maximal 1000° C begrenzten Glühtemperatur vollständig in der kubischen Kristallmodifikation verbleiben. Wie später noch beschrieben wird, ergeben sich aus dieser Tatsache Vorteile in Bezug auf die erreichbaren Helligkeiten und Halbwert-Lebenszeiten der erfindungsgemäßen Elektroluminophore. Nach dem Stand der Technik repräsentierenden Verfahren werden zunächst hexagonal kristallisierende ZnS-Elektroluminophore erhalten. Diese werden anschließend einer intensiven und oftmals schädlichen mechanischen Vermahlung unterzogen, um zumindest eine teilweise Rücktransformation in den kubischen Strukturtyp zu erreichen. Die damit im Zusammenhang stehenden Nachteile werden beim erfindungsgemäßen Verfahren von vornherein vermieden.
4. Schritt: Behandlung der nach dem Hauptglühprozeß erhaltenen pulverförmigen Elektroluminophore mittels organischer und anorganischer Säuren.
   Die nach der Realisierung der Präparationsschritte 1 bis 4 gewonnenen feinkörnigen zinksulfidischen Phosphore zeichnen sich durch hohe Photo-und Kathodolumineszenzausbeuten aus. Diese Tatsache spricht für den effektiven Einbau der Aktivatoren und Koaktivatoren in das ZnS-Gitter sowie für die hohe Wirksamkeit der unter diesen Anregungsbedingungen ablaufenden Lumineszenzvorgänge.
   Es ist jedoch zu verzeichnen, daß die auf diese Art und Weise synthetisierten Phosphore noch keine optimalen Elektrolumineszenzeigenschaften aufweisen.
   Die Effizienz der Elektrolumineszenz kann aber beträchtlicht gesteigert werden, wenn die zinksulfidischen Leuchtstoffpulver im Anschluß an den Hauptglühprozeß einer Behandlung mit organischen oder anorganischen Säuren wie z. B. Salzsäure (HCl), Schwefelsäure (H₂SO₄), Essigsäure oder Zitronensäure unterzogen werden.
   Dazu werden die erfindungsgemäß erhaltenen zinksulfidischen Phosphore in bestimmten Mengen der Lösungen dieser Säuren bei Temperaturen zwischen 20 und 60° C, vorzugsweise bei Raumtemperatur unter Rühren suspendiert, wobei die Verweilzeit der Leuchtstoffteilchen in dem jeweiligen Säurebad in Abhängigkeit von der Art und der Konzentration der ausgewählten Säure sowie von der gewählten Temperatur einen Bereich von 10 Minuten bis zu 10 Stunden umfassen kann. Anschließend werden die pulverförmigen ZnS-Elektroluminophore abfiltriert, mit deionisiertem Wasser bis zur pH-Neutralität gewaschen und gegebenenfalls bei Temperaturen von 100 bis 120 °C getrocknet.
   Wie elektronenmikroskopische Untersuchungen zeigen, weisen die erfindungsgemäßen feinstkörnigen Elektroluminophore nach dieser Säurebehandlung eine deutlich veränderte Morphologie der Kristallite auf. Diese ist durch eine hohe Rauhigkeit der Kristallitoberflächen sowie durch die Ausbildung von Rillen, Ecken, Kanten und anderen Strukturdefekten gekennzeichnet. Offenbar ist eine solche Modifizierung des Habitus der dotierten ZnS-Kristallite eine wichtige Voraussetzung für die nach der Säurebehandlung registrierte beträchtliche Steigerung der Elektrolumineszenzausbeuten der zinksulfidischen Luminophore.
   Ein vorteilhafter Nebeneffekt der beschriebenen Säurebehandlung besteht in der weiteren Reduzierung der mittleren Korngrößen der Leuchtstoffteilchen sowie in der weiteren Verengung der Korngrößenverteilungen. Das Ausmaß dieses Effektes kann über die Bedingungen der Säurebehandlung gesteuert werden. Die Säurebehandlung befördert zudem die Deagglomerierung der Leuchtstoffteilchen, wodurch zusätzliche Vorteile bei der Anwendung der erfindungsgemäßen Leuchtstoffe in elektrolumineszierenden Schichten (Dispergierverhalten, Schichthomogenität) resultieren.
5. Schritt: Nachdotieren der erfindungsgemäß synthetisierten feinstkörnigen Elektroluminophore mit bestimmten Mengen von Aktivator-und/oder Koaktivatorionen.
   Auch bei dem erfindungsgemäßen Verfahren gelingt eine weitere Erhöhung der EL-Effizienz durch die übliche abermalige Addition bestimmter Mengen von Aktivatorverbindungen, insbesondere von CuSO₄ und/oder von Koaktivatorverbindungen, insbesondere von solchen, die Al³⁺-Ionen enthalten und erneutes Glühen der resultierenden Feststoffgemische bei Temperaturen zwischen 300 und 800 °C. Auf diese Weise wird eine Feinjustierung der Aktivator-und/oder Koaktivatorkonzentrationen sowie der Verteilung der aktiven Lumineszenzzentren in der ZnS-Matrix erreicht.
   Nach einer Glühzeit von vorzugsweise 30 Minuten bis 10 Stunden wird das Glühgut auf Raumtemperatur abgekühlt und anschließend zur Entfernung von nicht in das ZnS-Gitter eingebauten und oberflächlich ausgeschiedenen Aktivator-und/oder Koaktivatorverbindungen (z.B. Cu₂S) mit H₂O, Mineralsäuren (z. B. HNO₃) oder mit KCN-Lösung gewaschen.
6. Schritt: Tempern der nach dem 5. Präparationsschritt erhaltenen sinksulfidischen Elektroluminophore für 30 Minuten bis 5 Stunden bei Temperaturen zwischen 200 und 500 °C.
   Dieser, das erfindungsgemäße Verfahren abschließende Präparationsschritt dient der endgültigen Manifestierung der für die Leistungsfähigkeit der erfindungsgemäßen feinstkörnigen zinksulfidischen Elektroluminophore vorteilhaften Leuchtstoffkomposition.
   Das Wesen der Erfindung liegt also in der Kombination der beschriebenen Verfahrensschritte, insbesondere in der Abfolge der erstgenannten 4 Schritte.
   Dabei wird bereits im 1. Schritt ein feinkörniges kubisches Zinksulfid erzeugt, das als Ausgangsmaterial für die Synthese der erfindungsgemäßen Elektroluminophore verwendet wird und dessen mittlere Korngröße, Korngrößenverteilung und Kristallstruktur durch die Begrenzung der Glühtemperatur auf maximal 1000° C und den Verzicht auf die Verwendung von Schmelzmitteln mit stark mineralisierender Wirkung im Schritt 3 des erfindungsgemäßen Verfahren im wesentlichen erhalten bleibt. Gleichzeitig sichert die gemäß Schritt 4 erfolgende Behandlung der nach dem Glühprozeß erhaltenen Leuchtstoffpulver mit anorganischen oder organischen Säuren zusammen mit den Verfahrensschritten 5 und 6, daß die erfindungsgemäß synthetisierten Elektroluminophore trotz der niedrigen Korngrößen alle für die Realisierung einer hohen Leistungsfähigkeit erforderlichen kompositorischen und Strukturmerkmale aufweisen.
   Durch die Abfolge der oben genannten 4 Verfahrensschritte ist es nun erstmals möglich, auf rein präparativem Wege und auf kostengünstige Art und Weise leistungsfähige, feinkörnige Elektroluminophore mit Korngrößen von 2 bis 20 µm zu erhalten, ohne die Korngröße nachträglich durch Vermahlungsprozesse und Aussieben korrigieren zu müssen, was mit schwerwiegenden Nachteilen verbunden wäre.
   Für Siebdruckanwendungen werden erfindungsgemäße zinksulfidische Elektroluminophore mit mittleren Korngrößen von 5 bis 20 µm verwendet. Elektroluminophore dieser Größenordnung lassen sich in vorteilhafter Weise zu leistungsfähigen EL-Lampen mit deutlich verbesserter Schichtstruktur verarbeiten.
   Erfindungsgemäße feinkörnige Elektroluminophore mit mittleren Korngrößen zwischen 2 und 5 µm sind dagegen besonders für die Anwendung im Tief- bzw.
   Offsetdruckbereich geeignet. Mit ihrer Hilfe lassen sich feine elektrolumineszierende graphische Strukturen z. B. als Sicherheitsmerkmale in Wertdrucken realisieren.
   In jedem Fall zeichnen sich die erfindungsgemäßen Luminophore durch eine an den jeweiligen Anwendungszweck angepaßte und in Bezug auf die eingestellte Korngröße optimale Helligkeits-Lebensdauer-Relation aus. Mehr noch, wie durchgeführte Untersuchungen zeigen, lassen sich unter Verwendung von erfindungsgemäß hergestellten Elektroluminophoren mit mittleren Korngrößen von 6 µm EL-Elemente konstruieren, die unter identischen Betriebsbedingungen Helligkeiten und Halbwert-Lebenszeiten aufweisen, die mit denen von aus handelsüblichen grobkörnigen EL-Pigmenten mit Korngrößen von 20 bis 40 µm gefertigten EL-Folien vergleichbar sind.
   Wie bereits erwähnt, ist dabei die überraschend hohe Lebensdauer der erfindungsgemäß gefertigten Elektroluminophore, insbesondere derjenigen EL-Pigmente, die nach der Erfindung mittlere Korngrößen von 2 bis 5 µm aufweisen mit großer Wahrscheinlichkeit auf ihre von den handelsüblichen EL-Pigmenten abweichende kubischen Kristallstrukture zurückzuführen.
   Diese wird nach dem Stand der Technik als vorteilhaft für die Erzielung hoher Helligkeiten und Stabilitäten angesehen.
   Zur weiteren Verbesserung der Stabilität können die einzelnen Kristallite der erfindungsgemäßen Elektroluminophore dem Stand der Technik entsprechend auch mit geeigneten Schutzschichten versehen werden. Zum Aufbringen solcher Schutzschichten sind zahlreiche Methoden und Materialien bekannt.
   Weitere Einzelheiten und Vorteile der Erfindung werden nachfolgend anhand von Ausführungsbeispielen und Zeichnungen erläutert.

### Beispiel 1

In einem Reaktionsgefäß werden 10 l einer 1.4 molaren ZnSO₄-Lösung vorgelegt. Anschließend wird der pH-Wert dieser Lösung unter Zugabe von Schwefelsäure (H₂SO₄) auf 1.0 eingestellt.

Das Ausfällen des feinkörnigen Zinksulfides erfolgt durch Einleiten von H₂S-Gas in die vorgelegte Lösung unter Rühren (Rührgeschwindigkeit 700 U/min). Dabei beträgt der Volumenstrom des H₂S-Gases 36 l/h, es wird bei einer Reaktionstemperatur von 60° C gearbeitet.

Nach einer Reaktionszeit von etwa 500 min wird der H₂S-Strom abgestellt. Noch im Reaktionsgefäß verbliebenes H₂S wird abgesaugt; die erhaltenen ZsS-Suspension wird dekantiert, mehrfach mit deionisiertem Wasser gewaschen und schließlich abfiltriert. Anschließend wird das gewonnene feinkörnige ZnS-Pulver bei einer Temperatur von 120° C im Trockenschrank getrocknet.

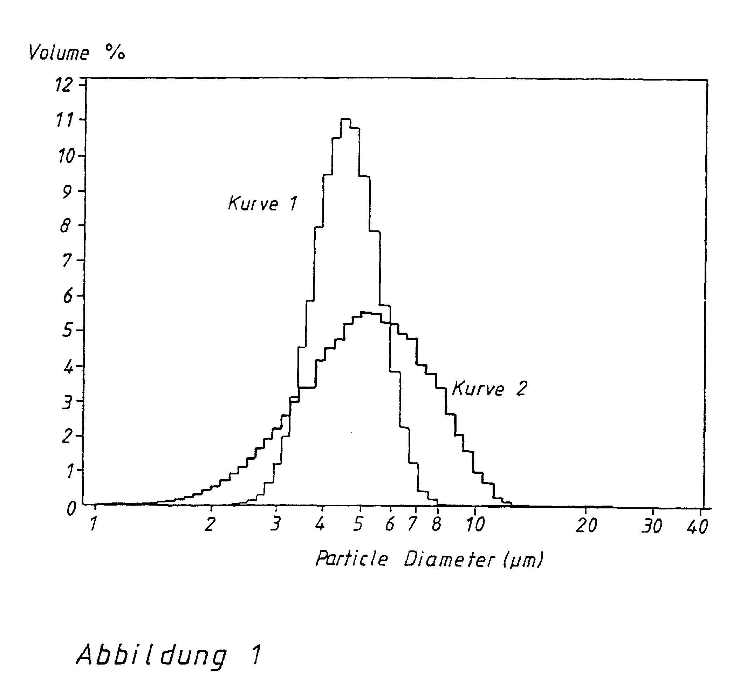

Die Kurve 1 der Abbildung 1 zeigt die mit der Hilfe eines Coulter-Counter-Korngrößenmeßgerätes ermittelte Korngrößenverteilung des so hergestellten feinkörnigen Zinksulfides. Auffallend ist die sehr schmale Verteilung der ZnS-Korngrößen (als ein Maß für die Breite der Verteilung kann der sogenannte QD-Wert angesehen werden, der sich nach der Formel QD = (d₇₅ - d₂₅/d₇₅ + d₂₅) errechnet, dieser Wert beträgt im vorliegenden Fall QD = 0.134); für die mittlere Korngröße des nach dem hier beschriebenen Verfahren hergestellten ZnS-Materials wurde ein d₅₀-Wert von 4.7 µm bestimmt.

Im nächsten Schritt wird eine bestimmte Menge des gewonnenen Zinksulfides in eine Kupfersulfatlösung eingerührt. Nach dem Einengen und Trocknen dieser Suspension bei etwa 120° C wird das nunmehr als Feststoffgemisch vorliegende Material noch einmal trocken homogenisiert und anschließend über eine 35 µm-Gaze abgesiebt. Die Berechnung der eingewogenen ZnS- und CuSO₄-Mengen erfolgt dabei so, daß der auf diese Weise erzeugte zinksulfidische Kupfer- "Aktivator" einen Kupfer-Gehalt von 1.5 % aufweist.

Ein vergleichbares Verfahren wird auch bei der Herstellung eines entsprechenden Bil₃-"Aktivators" angewendet. In dem hier beschriebenen Beispiel beträgt der Bil₃-Gehalt des ZnS-Bil₃-Gemisches 8.5 %.

Die Ansatzbereitung erfolgt anschließend durch das intensive Mischen von 1.65 kg des feinkörnigen Zinksulfides, 81.5 g des Kupfer-"Aktivators", 7.5 g des ZnS-Bil₃-Gemisches sowie von 5.2 g Aluminiumfluorid (AlF₃). Dieses Gemisch wird in bedeckte Quarzglühschalen gegeben und 2 Stunden bei einer Temperatur von 980°C in N_{2/}H₂-Atmosphäre mit einem Wasserstoffteil von 1.5 % geglüht.

Nach Beendigung des Glühprozesses wird das Glühgut auf Raumtemperatur abgekühlt und mehrfach mit deionisiertem Wasser gewaschen.

Im Anschluß daran erfolgt die Säurebehandlung des erhaltenen Materials. Dazu wird das gewaschene Glühgut in ein Säurebad gegeben und es werden bezogen auf 1 kg Glühgut unter Rühren 2 l H₂O und 500 ml einer 37%igen Salzsäure addiert. Nach einer Verweilzeit von einer Stunde wird dekantiert und bis zur pH-Neutralität mit deionisiertem Wasser gewaschen.

Die erneute Zugabe von Kupfersulfat zu dieser wässrigen Suspension dient dem Nachdotieren des Leuchtstoffmaterials. Die dabei eingesetzten CuSO₄-Menge wird nach der Relation 2 g Cu pro 1 kg Leuchtstoff berechnet.

Nach dem Eindampfen und Trocknen der Suspension wird das Trockengut in offenen Quarztiegeln 2 Stunden bei 600° C an Luft geglüht. Dem schließen sich eine Säurewäsche mit 10%iger HNO₃ sowie das mehrmalige Waschen mit H₂O bis zur pH-Neutralität an. Danach wird dekantiert, filtriert und getrocknet.

In einem abschließenden Verfahrensschritt wird das erhaltene Material noch einmal in offenen Quarztiegeln 2 Stunden bei 300° C an Luft getempert sowie nach dem Abkühlen durch Sieben homogenisiert.

Im Ergebnis dieser Präparationsschritte wird ein grün elektrolumineszierender ZnS-Cu-Leuchtstoff erhalten, der sich durch eine hohe Helligkeit und Halbwert-Lebenszeit auszeichnet. Die mittlere Korngröße des pulverförmigen Elektroluminophors beträgt 5.2 µm (QD = 0.265). Wie der Abbildung 1 (Kurve 2) zu entnehmen ist, liegt die mittlere Korngröße des nach dem Ausführungsbeispiel hergestellten EL-Pigmentes nur wesentlich über der des verwendeten ZnS-Ausgangsmaterials.

### Beispiel 2

Wie im Beispiel 1 erfolgt die Fällung des Zinksulfides nach Einleitung von H₂S-Gas in eine ZnSO₄-Lösung, wobei allerdings veränderte Reaktionsparameter eingestellt werden. Es wird von einer 0.25 molaren ZnSO₄-Lösung ausgegangen, der pH-Wert wird auf 1.6 fixiert, der H₂S-Volumenstrom beträgt 60 l/h und die Reaktionstemperatur 40° C.

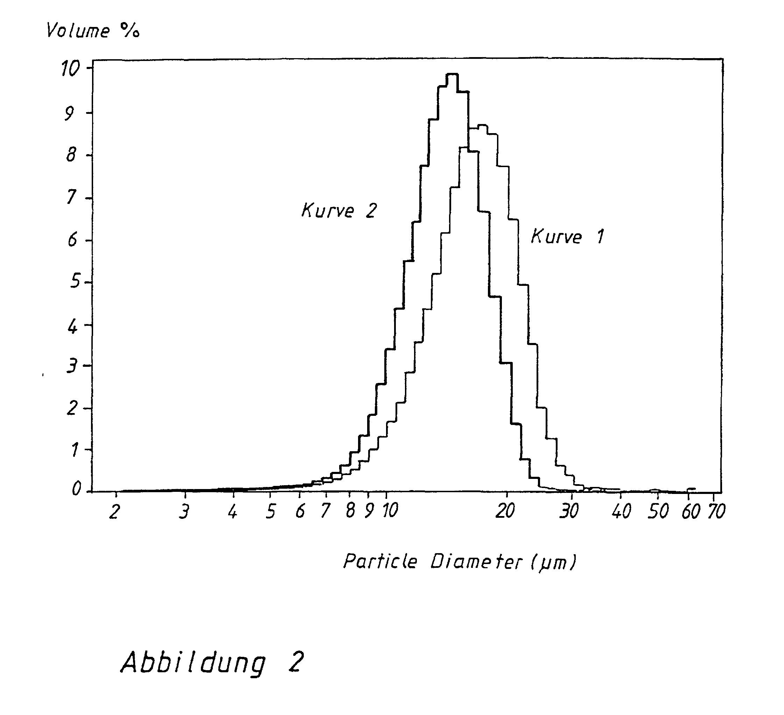

Das nach Beendigung der Fällungsreaktion in der Suspension vorliegende Zinksulfid weist eine mittlere Korngröße von 17.0 µm (QD = 0.174, vgl. Abb. 2, Kurve 1) auf. Die erhaltene ZnS-Suspension wird mehrfach mit deionisiertem Wasser gewaschen und dekantiert; anschließend erfolgt die Zugabe einer solchen Menge Kupfersulfat, daß die Kupferkonzentration des ZnS-Materials nach der Aktivierung 200 ppm beträgt. Die kupferaktivierte ZnS-Suspension wird in Trockenschalen überführt und bei 120° C getrocknet.

Zur Bereitung der Ansatzmischung für den Glühprozeß werden 1.75 kg des aktivierten Zinksulfides, 0.5 g Bil₃ und 2.5 AlF₃ intensiv vermischt. Das Glühen erfolgt in bedeckten Quarzglühschalen bei 990° C an Luft. Die Glühzeit beträgt 5 Stunden.

Nach dem Abkühlen des Glühgutes auf Raumtemperatur und dem Waschen mit dionisiertem Wasser wird eine 5 stündige Säurebehandlung mit 20%iger Zitronensäure durchgeführt. Anschließend wird dekantiert und mit H₂O bis zur pH-Neutralität gewaschen.

Das Nachdotieren des Leuchtstoffmaterials erfolgt wiederum durch Addition von Kupfersulfat (502.5 mg pro 1 kg Leuchtstoff) zu der wässrigen ZnS:Cu-Suspension.

Nach dem Eindampfen und Trocknen der Suspension wird das Trockengut in offenen Quarztiegeln 3 Stunden bei 700° C an Luft geglüht. Anschließend wird mit 10%iger HNO₃ behandelt, mehrmals mit H₂O (bis zur pH-Neutralität) gewaschen, dekantiert, filtriert und getrocknet.

Die abschließende Temperierung des zinksulfidischen Elektroluminophors erfolgt in offenen Quarztiegeln 1 Stunde bei 500° C an Luft, danach wird abgekühlt und gesiebt.

Der resultierende ZnS:Cu-Leuchtstoff weist eine intensive blaue Elektrolumineszenz, sowie eine hohe Halbwert-Lebzeit auf. Wie die Kurve 2 in der Abbildung 2 zeigt, liegt der die mittlere Korngröße charakterisierende d₅₀-Wert der Korngrößenverteilung des beispielhaften erfindungsgemäßen Elektroluminophors bei 14.5µm (QD = 0.156) und damit etwas unterhalb des für das entsprechende ZnS-Ausgangsmaterial ermittelten Wertes.

## Patentansprüche

1. Verfahren zur Herstellung zinksulfidischer Elektroluminophore mit folgenden Verfahrensschritten:
1. Herstellung eines feinkörnigen Zinksulfides durch Ausfällen von Zinksulfid aus den Lösungen geeigneter Zinksalze mit H₂S.
2. Mischen des erhaltenen feinkörnigen Zinksulfides mit den zur Leuchtstoffsynthese benötigten Aktivator- und Koaktivatorverbindungen.
3. Glühen der erhaltenen Mischungen im Temperaturbereich von 800 bis maximal 1000° C in Gegenwart von aus den Verbindungsklassen der Fluoride und/oder Bromide und/oder lodide ausgewählten Schmelzmitteln mit nur schwach mineralisierender Wirkung.
4. Behandlung der nach Schritt 3 erhaltenen pulverförmigen Elektroluninophore mittels organischer und/oder anorganischer Säuren in einem Säurebad unter Rühren sowie Waschen, Neutralisieren sowie gegebenenfalls Abfiltrieren und Trocknen der zinksulfidischen Elektroluminophore.

2. Verfahren nach Anspruch 1, **dadurch gekennzeichnet, daß** das Ausfällen des feinkörnigen Zinksulfides durch Einleiten von H₂S in Zinksalzlösungen wie z. B. ZnSO₄, Zn(NO₃)₂ und ZnCl₃, vorzugsweise durch Einleiten von H₂S in Zinksulfatlösungen mit Zinkionen-Konzentrationen von 0.25 mol/l bis 2.0 mol/l bei Temperaturen zwischen 20 und 80° C und pH-Werten von 0.5 bis 3.0 erfolgt.

3. Verfahren nach Anspruch 1 und 2, **dadurch gekennzeichnet, daß** die im Verfahrensschritt 2 benötigten Aktivator- und Koaktivatorverbindungen bereits während der im ersten Schritt erfolgenden Fällung des feinkörnigen Zinksulfides bzw. unmittelbar nach Beendigung der Fällung zu der gewaschenen ZnS-Suspension hinzugegeben werden.

4. Verfahren nach Anspruch 1, **dadurch gekennzeichnet, daß** die benötigten Aktivator- und Koaktivatorverbindungen im Verfahrensschritt 2 in trockener Form zunächst mit einem Teil des nach dem ersten Verfahrensschritt erhaltenen, gewaschenen und getrockneten feinkörnigen Zinksulfides vermischt werden und dieses Gemisch dann mit der zur Wahrung der angestrebten Leuchtstoffzusammensetzung benötigten Restmenge an feinkörnigem ZnS vereinigt wird.

5. Verfahren nach Anspruch3 und 4, **dadurch gekennzeichnet, daß** es sich bei den zugegebenen Aktivator- und Koaktivatorverbindungen um Kupfersulfat und/oder Tetrachlorogoldsäure bzw. das entsprechende Natriumsalz und/oder Mangansulfat und/oder Aluminiumnitrat handelt.

6. Verfahren nach Anspruch 1, **dadurch gekennzeichnet, daß** dem Ansatzgemisch für das Glühen nach Verfahrensschritt 3 kein stark mineralisierend wirkendes Schmelzmittel, insbesondere kein chloridhaltiges Schmelzmittel zugesetzt wird.

7. Verfahren nach Anspruch 1, **dadurch gekennzeichnet, daß** dem Ansatzgemisch für das Glühen nach Verfahrensschritt 3 ein nur schwach mineralisierend wirkendes Schmelzmittel ausgewählt aus den Verbindungsklassen der Fluoride und/oder Bromide und/oder Iodide zugesetzt wird, das neben den Halogenidanionen als Koaktivatoren wirkende kationische Bestandteile, z. B. Al³⁺-Ionen enthält.

8. Verfahren nach Anspruch 6 und 7, **dadurch gekennzeichnet, daß** das Glühen im 3. Schritt an Luft oder in einer inerten Stickstoffatmosphäre oder in einer Atmosphäre bestehend aus einem Gasgemisch aus Stickstoff und 1 bis 10 % Wasserstoff erfolgt.

9. Verfahren nach Anspruch 8, **dadurch gekennzeichnet, daß** das erhaltene Glühgut nach Beendigung des Glühprozesses im Schritt 3 auf Raumtemperatur abgekühlt, mit deionisiertem Wasser gewaschen und anschließend gegebenenfalls filtriert und getrocknet wird.

10. Verfahren nach Anspruch 1, **dadurch gekennzeichnet, daß** die Säurebehandlung im 4. Verfahrensschritt in einem Säurebad mit organischen Säuren wie z. B. Essigsäure oder Zitronensäure oder aber mit anorganischen Mineralsäuren wie z. B. Salzsäure, Salpetersäure oder Schwefelsäure bei Verweilzeiten von 10 Minuten bis 10 Stunden bei Temperaturen zwischen 20 und 60° C erfolgt.

11. Verfahren nach Anspruch 10, **dadurch gekennzeichnet, daß** die Säurebehandlung im 4. Verfahrensschritt mit einer etwa 37%igen HCl-Lösung für 2 bis 6 Stunden unter Rühren bei Raumtemperatur stattfindet.

12. Verfahren nach Anspruch 10, **dadurch gekennzeichnet, daß** die Säurebehandlung im 4. Schritt mit einer 10 bis 20%igen Zitronensäurelösung für 4 bis 8 Stunden unter Rühren bei 60° C erfolgt.

13. Verfahren nach einem der Ansprüche 1 - 12, **dadurch gekennzeichnet, daß** nach dem Waschen, Neutralisieren und nach dem gegebenenfalls durchgeführten Abfiltrieren und Trocknen der nach Schritt 4 erhaltenen Elektroluminophore in einem 5. Verfahrensschritt eine Nachdotierung mit bestimmten Mengen der Aktivator- und Koaktivatorverbindungen erfolgt.

14. Verfahren nach Anspruch 13, **dadurch gekennzeichnet, daß** die Nachdotierung mit Kupfer- und/oder Gold- und/oder Mangan- und/oder Aluminiumverbindungen erfolgt.

15. Verfahren nach Anspruch 13 und 14, **dadurch gekennzeichnet, daß** es sich bei den zur Nachdotierung verwendeten Verbindungen vorzugsweise um Kupfersulfat und/oder Tetrachlorogoldsäure bzw. das entsprechende Natriumsalz und/oder Mangansulfat und/oder Aluminiumnitrat handelt.

16. Verfahren nach einem der Ansprüche 13 - 15, **dadurch gekennzeichnet, daß** das Nachdotieren durch 30 minütiges bis zehnstündiges Glühen in einem Temperaturbereich zwischen 300° C und 800° C erfolgt.

17. Verfahren nach einem der Ansprüche 13 - 16, **dadurch gekennzeichnet, daß** das Nachdotieren an der Luft oder in einer inerten Stickstoffatmosphäre oder in einer Atmosphäre bestehend aus einem Gemisch aus Stickstoff und 1 bis 10 % Wasserstoff erfolgt.

18. Verfahren nach einem der Ansprüche 13 - 17, **dadurch gekennzeichnet, daß** das Glühgut nach dem Abkühlen auf Raumtemperatur zur Beseitigung von gegebenenfalls an der Oberfläche der zinksulfidischen Elektroluminophore ausgeschiedenen Aktivator- und/oder Koaktivatormaterialien mit Mineralsäuren wie z. B. Salpetersäuren und/oder mit KCN-Lösung gewaschen wird.

19. Verfahren nach einem der Ansprüche 13 - 18, **dadurch gekennzeichnet, daß** die zinksulfidischen Elektroluminophore nach der im Anschluß an das Nachdotieren stattfindenden Behandlung mit Mineralsäuren oder KCN-Lösung mit deionisiertem Wasser bis zur pH-Neutralität gewaschen und anschließend abfiltriert und getrocknet wird.

20. Verfahren nach einem der Ansprüche 1 - 19, **dadurch gekennzeichnet, daß** in einem 6. Verfahrensschritt eine Temperung der Elektroluminophore bei einer Temperatur im Bereich zwischen 200° und 500° C stattfindet, wobei die Zeitdauer der Temperung 30 Minuten bis 5 Stunden beträgt.

21. Verfahren nach Anspruch 20, **dadurch gekennzeichnet, daß** die Temperung an Luft oder in einer inerten Stickstoffatmosphäre oder in einer Atmosphäre bestehend aus einem Gemisch aus Stickstoff und 1 bis 10 % Wasserstoff erfolgt.

22. Zinksulfidischer Elektorluminophor mit kubischer Kristallstruktur und mit charakteristischer Gefügestruktur, **dadurch gekennzeichnet, daß** die Leuchtstoffteilchen typische mittlere Korngrößen von 2 bis 5 µm aufweisen.

23. Zinksulfidischer Elektroluminophor mit kubischer Kristallstruktur und mit charakteristischer Gefügestruktur, **dadurch gekennzeichnet, daß** die Leuchtstoffteilchen typische mittlere Korngrößen von 5 bis 15 µm aufweisen.

24. Zinksulfidischer Elektroluminophor nach Anspruch 22 oder 23, **dadurch gekennzeichnet, daß** die Leuchtstoffteilchen zur weiteren Erhöhung der Lebensdauer mit dünnen organisch und/oder mit kristallinen oder amorphen anorganischen Schutzschichten ummantelt sind.

25. Zinksulfidischer Elektroluminophor nach Anspruch 24, **dadurch gekennzeichnet, daß** die Schutzschicht aus einem inneren Metalloxid-Film und aus einem äußeren Siliziumnitrat-Film besteht.

26. Zinksulfidischer Elektroluminophor nach einem oder mehreren der Ansprüche 22 - 25, **dadurch gekennzeichnet, daß** die Leuchtstoffteilchen in einer Siebdruckfarbe dispergierbar sind und vorzugsweise in engmaschigen Sieben (120 Maschen/inch) verdruckbar sind.

27. Zinksulfidischer Elektorluminophor nach einem oder mehreren der Ansprüche 22 - 25, **dadurch gekennzeichnet, daß** die Leuchtstoffteilchen in einer Rastertiefdruckfarbe oder Flexodruckfarbe oder Offsetdruckfarbe oder Lettersetdruckfarbe oder Stichtiefdruckfarbe dispergierbar und verdruckbar sind.

28. Zinksulfidischer Elektroluminophor nach einem oder mehreren der Ansprüche 22 - 25, **dadurch gekennzeichnet, daß** die Leuchtstoffteilchen auf Thermotransfer-Folien aufgetragen werden und mittels Transferdruck auf druckfähige Untergründe applizierbar sind.

29. Zinksulfidischer Elektroluminophor nach einem oder mehreren der Ansprüche 22 - 25, **dadurch gekennzeichnet, daß** die Leuchtstoff teilchen in thermoplastische Granulat-Matrixen eingebettet und mittels Extrusion/Coextrusion und/oder Dünnfolien-Gießen zu Folien verarbeitet werden.

30. Verwendung eines zinksulfidischen Elektroluminophors nach Anspruch 22 für den Tief- bzw. Offsetdruckbereich.

31. Verwendung eines zinksulfidischen Elektroluminophors nach Anspruch 23 für den Siebdruck.

## Claims

1. Process for the preparation of zinc sulphide electroluminophors, comprising the following process steps:
1. preparation of a fine-particled zinc sulphide by precipitating zinc sulphide from the solutions of suitable zinc salts with H₂S,
2. mixing of the resulting fine-particled zinc sulphide with the activator and coactivator compounds required for the synthesis of the phosphor,
3. ignition of the resulting mixtures in the temperature range from 800 to not more than 1000°C in the presence of fluxes selected from the compound classes consisting of the fluorides and/or bromides and/or iodides and having only a weak mineralizing effect and
4. treatment of the pulverulent electroluminophors obtained according to step 3 by means of organic and/or inorganic acids in an acid bath with stirring and washing, neutralization and optionally filtering off and drying of the zinc sulphide electroluminophors.

2. Process according to Claim 1, **characterized in that** the precipitation of the fine-particled zinc sulphide is effected by passing H₂S into zinc salt solutions, such as, for example, ZnSO₄, Zn(NO₃)₂ and ZnCl₃, preferably by passing H₂S into zinc sulphate solutions having zinc ion concentrations of 0.25 mol/l to 2.0 mol/l at temperatures between 20 and 80°C and pH values of 0.5 to 3.0.

3. Process according to either of Claims 1 and 2, **characterized in that** the activator and coactivator compounds required in process step 2 are added to the washed ZnS suspension during the precipitation of the fine-particled zinc sulphide, which is effected in the first step, or immediately after the end of the precipitation.

4. Process according to Claim 1, **characterized in that** the required activator and coactivator compounds in process step 2 are first mixed, in dry form, with a part of the washed and dried fine-particled zinc sulphide obtained according to the first process step, and this mixture is then combined with the residual amount of fine-particled ZnS, which residual amount is required for complying with the desired phosphor composition.

5. Process according to either of Claims 3 and 4, **characterized in that** the added activator and coactivator compounds are copper sulphate and/or tetrachloroauric acid or the corresponding sodium salt and/or manganese sulphate and/or aluminium nitrate.

6. Process according to Claim 1, **characterized in that** no flux having a strong mineralizing effect, in particular no chloride-containing flux, is added to the mixture for the ignition according to process step 3.

7. Process according to Claim 1, **characterized in that** a flux having only a weak mineralizing effect and selected from the compound classes consisting of the fluorides and/or bromides and/or iodides is added to the mixture for the ignition according to process step 3, said flux containing cationic components acting as coactivators, e.g. Al³⁺ ions, in addition to the halide anions.

8. Process according to either of Claims 6 and 7, **characterized in that** the ignition in the 3rd step is effected in air or in an inert nitrogen atmosphere or in an atmosphere consisting of a gas mixture comprising nitrogen and 1 to 10% of hydrogen.

9. Process according to Claim 8, **characterized in that**, after the end of the ignition process in step 3, the ignited material obtained is cooled to room temperature, washed with demineralized water and then optionally filtered and dried.

10. Process according to Claim 1, **characterized in that** the acid treatment in the 4th process step is effected in an acid bath with organic acids, such as, for example, acetic acid or citric acid, or with inorganic mineral acids, such as, for example, hydrochloric acid, nitric acid or sulphuric acid, during residence times of 10 minutes to 10 hours at temperatures between 20 and 60°C.

11. Process according to Claim 10, **characterized in that** the acid treatment in the 4th process step takes place with an approximately 37% HCl solution for 2 to 6 hours with stirring at room temperature.

12. Process according to Claim 10, **characterized in that** the acid treatment in the 4th step is effected with a 10 to 20% citric acid solution for 4 to 8 hours with stirring at 60°C.

13. Process according to any of Claims 1 - 12, **characterized in that**, after the washing and neutralization and after the optionally performed filtration and drying of the electroluminophors obtained after step 4, subsequent doping with certain amounts of the activator and coactivator compounds is effected in a 5th process step.

14. Process according to Claim 13, **characterized in that** the subsequent doping is effected using copper compounds and/or gold compounds and/or manganese compounds and/or aluminium compounds.

15. Process according to either of Claims 13 and 14, **characterized in that** the compounds used for the subsequent doping are preferably copper sulphate and/or tetrachloroauric acid or the corresponding sodium salt and/or manganese sulphate and/or aluminium nitrate.

16. Process according to any of Claims 13 - 15, **characterized in that** the subsequent doping is effected by ignition for 30 minutes to ten hours in a temperature range between 300°C and 800°C.

17. Process according to any of Claims 13 - 16, **characterized in that** the subsequent doping is effected in the air or in an inert nitrogen atmosphere or in an atmosphere consisting of a mixture comprising nitrogen and 1 to 10% of hydrogen.

18. Process according to any of Claims 13 - 17, **characterized in that** the ignited material is washed with mineral acids, such as, for example, nitric acid, and/or with KCN solution after cooling to room temperature for elimination of any activator and/or coactivator materials deposited on the surface of the zinc sulphide electroluminophors.

19. Process according to any of Claims 13 - 18, **characterized in that**, after the treatment with mineral acids or KCN solution which takes place after the subsequent doping, the zinc sulphide electroluminophors are washed to pH neutrality with demineralized water and then filtered off and dried.

20. Process according to any of Claims 1 - 19, **characterized in that** heating of the electroluminophors at a temperature in the range between 200° and 500°C takes place in a 6th process step, the duration of the heating being 30 minutes to 5 hours.

21. Process according to Claim 20, **characterized in that** the heating is effected in air or in an inert nitrogen atmosphere or in an atmosphere consisting of a mixture comprising nitrogen and 1 to 10% of hydrogen.

22. Zinc sulphide electroluminophor having a cubic crystal structure and having a characteristic grain structure, **characterized in that** the phosphor particles have typical mean particles sizes of 2 to 5 µm.

23. Zinc sulphide electroluminophor having a cubic crystal structure and having a characteristic grain structure, **characterized in that** the phosphor particles have typical mean particle sizes of 5 to 15 µm.

24. Zinc sulphide electroluminophor according to Claim 22 or 23, **characterized in that** the phosphor particles are coated with thin organic and/or with crystalline or amorphous inorganic protective layers for further increasing the life.

25. Zinc sulphide electroluminophor according to Claim 24, **characterized in that** the protective layer consists of an inner metal oxide film and of an outer silicon nitrate film.

26. Zinc sulphide electroluminophor according to one or more of Claims 22 - 25, **characterized in that** the phosphor particles are dispersible in a screen printing ink and are preferably printable in narrow-mesh screens (120 meshes/inch).

27. Zinc sulphide electroluminophor according to one or more of Claims 22 - 25, **characterized in that** the phosphor particles are dispersible and printable in a halftone gravure printing ink or flexographic printing ink or offset printing ink or letterset printing ink or intaglio printing ink.

28. Zinc sulphide electroluminophor according to one or more of Claims 22 - 25, **characterized in that** the phosphor particles are applied to thermal transfer films and can be applied to printable substrates by means of transfer printing.

29. Zinc sulphide electroluminophor according to one or more of Claims 22 - 25, **characterized in that** the phosphor particles are embedded in thermoplastic granule matrices and are processed by means of extrusion/coextrusion and/or thin-film casting to give films.

30. Use of a zinc sulphide electroluminophor according to Claim 22 for the gravure or offset printing sector.

31. Use of a zinc sulphide electroluminophor according to Claim 23 for screen printing.

## Revendications

1. Procédé pour fabriquer des électroluminophores à base de sulfure de zinc, comprenant les étapes consistant à :
1. fabriquer un sulfure de zinc à grains fins par précipitation de sulfure de zinc à partir des solutions de sels de zinc adéquats avec H₂S,
2. mélanger le sulfure de zinc à grains fins obtenu, avec les composés activateurs et coactivateurs nécessaires pour la synthèse de la substance luminescente,
3. calciner dans la plage de températures de 800 à 1000°C maximum les mélanges obtenus, en présence de fondants choisis dans les classes de composés des fluorures et/ou des bromures et/ou des iodures et qui n'ont qu'une faible action minéralisante,
4. traiter les électroluminophores pulvérulents obtenus selon l'étape 3, à l'aide d'acides organiques et/ou inorganiques dans un bain acide, en remuant et lavant, neutralisant et éventuellement filtrant et séchant les électroluminophores à base de sulfure de zinc.

2. Procédé selon la revendication 1, **caractérisé en ce que** la précipitation du sulfure de zinc à grains fins se fait grâce à l'introduction de H₂S dans des solutions de sel de zinc comme par exemple ZnSO₄, Zn(NO₃)₂ et ZnCl₃, de préférence grâce à l'introduction de H₂S dans des solutions de sulfate de zinc avec des concentrations d'ions de zinc de 0,25 mole/l à 2,0 moles/l, à des températures situées entre 20 et 80°C et à des pH de 0,5 à 3,0.

3. Procédé selon la revendication 1 et 2, **caractérisé en ce que** les composés activateurs et coactivateurs nécessaires lors de l'étape 2 sont ajoutés à la suspension de ZnS lavée dès la précipitation du sulfure de zinc à grains fins qui a lieu lors de la première étape, ou immédiatement après la fin de la précipitation.

4. Procédé selon la revendication 1, **caractérisé en ce que** lors de l'étape 2, les composés activateurs et coactivateurs nécessaires sont tout d'abord mélangés sous une forme sèche à une partie du sulfure de zinc à grains fins lavé et séché obtenu lors de la première étape, et ce mélange est ensuite combiné avec la quantité restante de ZnS à grains fins qui est nécessaire pour conserver la composition de substance luminescente recherchée.

5. Procédé selon les revendications 3 et 4, **caractérisé en ce que** les composés activateurs et coactivateurs ajoutés sont constitués par du sulfate de cuivre et/ou de l'acide tétrachloraurique ou du sel de sodium correspondant et/ou du sulfate de manganèse et/ou du nitrate d'aluminium.

6. Procédé selon la revendication 1, **caractérisé en ce qu'**on n'ajoute pas de fondant à forte action minéralisante, en particulier pas de fondant contenant du chlorure, au mélange initial pour la calcination de l'étape 3.

7. Procédé selon la revendication 1, **caractérisé en ce qu'**on n'ajoute au mélange initial pour la calcination de l'étape 3 qu'un fondant à faible action minéralisante, choisi dans les classes de composés des fluorures et/ou des bromures et/ou des iodures, qui contient en plus des ions halogénure des éléments cationiques agissant comme des coactivateurs, par exemple des ions Al³⁺.

8. Procédé selon les revendications 6 et 7, **caractérisé en ce que** la calcination de l'étape 3 se fait à l'air ou dans une atmosphère d'azote inerte ou dans une atmosphère composée d'un mélange gazeux à base d'azote et de 1 à 10 % d'hydrogène.

9. Procédé selon la revendication 8, **caractérisé en ce que** le produit calciné obtenu est ramené à la température ambiante après achèvement de la calcination de l'étape 3, est lavé avec de l'eau désionisée puis est éventuellement filtré et séché.

10. Procédé selon la revendication 1, **caractérisé en ce que** le traitement à l'acide de l'étape 4 se fait dans un bain acide contenant des acides organiques comme par exemple de l'acide acétique ou de l'acide citrique, ou bien des acides minéraux inorganiques comme par exemple de l'acide chlorhydrique, de l'acide nitrique ou de l'acide sulfurique, avec des temps de séjour de 10 minutes à 10 heures et à des températures situées entre 20 et 60°C.

11. Procédé selon la revendication 10, **caractérisé en ce que** le traitement à l'acide de l'étape 4 a lieu avec une solution d'HCl à environ 37 % pendant 2 à 6 heures, en remuant et à température ambiante.

12. Procédé selon la revendication 10, **caractérisé en ce que** le traitement à l'acide de l'étape 4 se fait avec une solution d'acide citrique à 10 à 20 % pendant 4 à 8 heures, en remuant, à 60°C.

13. Procédé selon l'une des revendications 1 à 12, **caractérisé en ce qu'**après le lavage et la neutralisation et après le filtrage et le séchage éventuels des électroluminophores obtenus à l'issue de l'étape 4, on rajoute lors d'une 5^{ème} étape des quantités définies des composés activateurs et coactivateurs.

14. Procédé selon la revendication 13, **caractérisé en ce que** cet ajout se fait à l'aide de composés de cuivre et/ou d'or et/ou de manganèse et/ou d'aluminium.

15. Procédé selon la revendication 13 ou 14, **caractérisé en ce que** ces composés rajoutés sont constitués de préférence par du sulfate de cuivre et/ou de l'acide tétrachloraurique ou le sel de sodium correspondant et/ou du sulfate de manganèse et/ou du nitrate d'aluminium.

16. Procédé selon l'une des revendications 13 à 15, **caractérisé en ce que** le rajout se fait grâce à une calcination de 30 minutes à 10 heures dans une plage de températures située entre 300°C et 800°C.

17. Procédé selon l'une des revendications 13 à 16, **caractérisé en ce que** le rajout se fait à l'air ou dans une atmosphère d'azote inerte ou dans une atmosphère composée d'un mélange d'azote et de 1 à 10 % d'hydrogène.

18. Procédé selon l'une des revendications 13 à 17, **caractérisé en ce que** le produit calciné, après avoir été ramené à la température ambiante, est lavé avec des acides minéraux comme par exemple des acides nitriques et/ou une solution de KCN pour être débarrassé des matériaux activateurs et/ou coactivateurs éventuellement déposés sur la surface des électroluminophores à base de sulfure de zinc.

19. Procédé selon l'une des revendications 13 à 18, **caractérisé en ce que** les électroluminophores à base de sulfure de zinc, après le traitement avec des acides minéraux ou une solution de KCN qui suit le rajout, sont lavés avec de l'eau désionisée jusqu'à obtention d'un pH neutre, puis sont filtrés et séchés.

20. Procédé selon l'une des revendications 1 à 19, **caractérisé en ce que** lors d'une 6^{ème} étape, un recuit des électroluminophores a lieu à une température comprise dans une plage allant de 200° à 500°C, la durée de ce recuit étant de 30 minutes à 5 heures.

21. Procédé selon la revendication 20, **caractérisé en ce que** le recuit se fait à l'air ou dans une atmosphère d'azote inerte ou dans une atmosphère composée d'un mélange d'azote et de 1 à 10 % d'hydrogène.

22. Electroluminophore à base de sulfure de zinc, avec une structure cristalline cubique et une structure caractéristique, **caractérisé en ce que** les particules de substance luminescente ont des grosseurs de grains moyennes typiques de 2 à 5 µm.

23. Electroluminophore à base de sulfure de zinc, avec une structure cristalline cubique et une structure caractéristique, **caractérisé en ce que** les particules de substance luminescente ont des grosseurs de grains moyennes typiques qui vont de 5 à 15 µm.

24. Electroluminophore à base de sulfure de zinc selon la revendication 22 ou 23, **caractérisé en ce que** les particules de substance luminescente, pour une plus grande durée de vie, sont enrobées de minces couches de protection organiques et/ou inorganiques cristallines ou amorphes.

25. Electroluminophore à base de sulfure de zinc selon la revendication 24, **caractérisé en ce que** la couche de protection se compose d'une pellicule d'oxyde métallique intérieure et d'une pellicule de nitrate de silicium extérieure.

26. Electroluminophore à base de sulfure de zinc selon l'une au moins des revendications 22 à 25, **caractérisé en ce que** les particules de substance luminescente sont aptes à être dispersées dans une encre pour sérigraphie et à être appliquées par impression de préférence dans des écrans à mailles étroites (120 mailles/pouce).

27. Electroluminophore à base de sulfure de zinc selon l'une au moins des revendications 22 à 25, **caractérisé en ce que** les particules de substance luminescente sont aptes à être dispersées et appliquées par impression dans une encre pour héliogravure tramée ou pour flexographie ou pour impression offset ou pour offset sec ou pour héliogravure au trait.

28. Electroluminophore à base de sulfure de zinc selon l'une au moins des revendications 22 à 25, **caractérisé en ce que** les particules de substance luminescente sont appliquées sur des feuilles de thermotransfert et sont aptes à être appliquées par impression par transfert sur des supports imprimables.

29. Electroluminophore à base de sulfure de zinc selon l'une au moins des revendications 22 à 25, **caractérisé en ce que** les particules de substance luminescente sont enrobées dans des matrices de granulat thermoplastiques et sont transformées en feuilles par extrusion/coextrusion et/ou coulage de feuilles minces.

30. Utilisation d'un électroluminophore à base de sulfure de zinc selon la revendication 22 pour le domaine de l'héliogravure ou de l'impression offset.

31. Utilisation d'un électroluminophore à base de sulfure de zinc selon la revendication 23 pour la sérigraphie.
